# EUROPÄISCHE PATENTSCHRIFT

(11) **EP 1 400 340 B1**
(45) Veröffentlichungstag und Bekanntmachung des Hinweises auf die Patenterteilung: **16.01.2008**
(21) Anmeldenummer: 03017918.8
(22) Anmeldetag: 06.08.2003
(51) Int. Cl.: B29C 67/00

(54) **Verfahren zur Herstellung eines dreidimensionalen Objektes**
Method for manufacturing a three dimensional object
Procédé pour la fabrication d'objets tridimensionnelles

(30) Priorität: 21.09.2002 DE 10244047; 15.03.2003 DE 10311446
(43) Veröffentlichungstag der Anmeldung: 24.03.2004
(73) Patentinhaber: Evonik Degussa GmbH, 40474 Düsseldorf (DE)
(72) Erfinder: Monsheimer, Sylvia, 45721 Haltern am See (DE); Gerth, Christian, Dr., 45721 Haltern am See (DE); Baumann, Franz-Erich, Dr., 48249 Dülmen (DE); Grebe, Maik, 44805 Bochum (DE)

(56) Entgegenhaltungen:
- WO-A-01/38061
- BEHROKH KOSHNEVIS ET AL.: "SIS- A New Method Based on Powder Sintering" SOLID FREEFORM FABRICATION PROCEEDINGS, August 2002 (2002-08), Seiten 440-447, XP008026503 Austin, Texas, USA

## Beschreibung

Die Erfindung betrifft ein Verfahren bei dem ein Polymerpulver, einsetzbar für die Herstellung von dreidimensionalen Objekten mittels Selektivem Inhibieren des Verbindens (SIV) eingesetzt werden.

Die zügige Bereitstellung von Prototypen ist eine in der jüngsten Zeit häufig gestellte Aufgabe. Ein Verfahren, welches besonders gut für den Zweck des Rapid Prototyping geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren relativ schnell wieder zu einer festen Masse. Durch wiederholtes Belichten von immer neu aufgebrachten Schichten können mit diesem Verfahren komplexe dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie Polyacetat, Polypropylen, Polyethylen, Ionomere und Polyamid 11.

In der Praxis hat sich beim Laser-Sintern vor allem Polyamid 12-Pulver für die Herstellung von technischen Bauteilen bewährt. Die aus PA12-Pulver gefertigten Teile genügen hohen mechanischen Beanspruchungen und kommen damit in ihren Eigenschaften besonders nahe an die späteren Serienteile hergestellt mittels Spritzguss oder Extrusion heran.

Besonders gut geeignet ist dabei ein Polyamid 12 mit einer Schmelztemperatur von 185 bis 189 °C, einer Schmelzenthalpie von 112 ± 17 kJ/mol und einer Erstarrungstemperatur von 138 bis 143 °C, wie es in EP 0 911 142 beschrieben wird. Vorzugsweise werden dabei Pulver mit einer mittleren Korngröße von 50 bis 150 µm eingesetzt, wie man sie beispielsweise gemäß DE 197 08 946 oder auch DE 44 21 454 erhält.

Der Nachteil des SLS-Verfahrens liegt zum einen in den hohen Kosten für die Geräte, insbesondere den Laser. Zum anderen ist die Verarbeitungsgeschwindigkeit beim Laser-Sintern relativ langsam, da mit der punktförmigen Lichtquelle große Flächen abgescannt werden müssen. Diese Nachteile verhindern eine breite Verwendung dieses Verfahrens zur Herstellung von am Computer generierten Objekten, so dass die Anwendung des SLS-Verfahrens im Moment auf den Bereich des Rapid Prototypings beschränkt bleibt. Ein weiteres Problem besteht darin, dass mit dem SLS-Verfahren farbige Pulver, vor allem Pulver mit dunkler Farbe nicht verarbeitet werden können.

Verfahren, die im Bereich des Rapid Manufacturings einsetzbar sind und die auch für Heimanwendungen brauchbar sind, müssen deutlich einfacher durchführbar sein und sollten insbesondere auf den Einsatz von teueren und komplizierten Apparaturen und Ausgangsmaterialien verzichten können.

Von Koshnevis (WO 01/38061) ist ein Verfahren entwickelt worden, bei dem eine Masse aus Schichten eines zu verbindenden (sinternden) Pulvers aufgebaut wird, wobei jeweils nach dem Aufbringen einer Schicht eines zu verbindenden Pulvers, die Schicht in ausgewählten Bereichen mit einem Verbindungsinhibitor behandelt wird, so dass das Verbinden nur in den Bereichen des Querschnitts des dreidimensionalen Gegenstands erfolgt. Das Verbinden (Sintern) kann jeweils nach Behandlung einer Schicht mit einem Verbindungsinhibitor erfolgen. Es ist aber auch möglich, nach Fertigstellung aller Schichten die Masse z. B. in einem Ofen zu sintern. Da nur die Bereiche verbunden werden, die nicht mit dem Verbindungsinhibitor in Berührung gekommen sind, wird ein schichtartig aufgebauter, dreidimensionaler Körper erhalten.

In WO 01/38061 werden als Matrixmaterialien allgemein Polymer- und Metallpulver genannt. Nachteilig bei den meisten Polymerpulvern ist der relativ große Schrumpf, der insbesondere beim Sintern von Polymerpulvern auftritt. Zudem sind die Verarbeitungstemperaturen einiger Polymerpulver ungeeignet, um insbesondere beim Sintern eingesetzt zu werden, da durch die hohen Temperaturen technische Probleme bei der Verarbeitung auftreten können.

Es war deshalb Aufgabe der vorliegenden Erfindung, Polymerpulver bereitzustellen, die für den Einsatz als Matrixmaterial in dem in WO 01/38061 beschriebenen Verfahren zur Herstellung von dreidimensionalen Objekten mittels selektiver Verbindungshemmung/ -inhibition eingesetzt werden.

In BEHROPK KOSHNEVIS ET AL.: ,SIS- A New Method Based on Powder Sintering' SOLID FREEFORM FABRICATION PROCEEDINGS, August 2002 (2002-08) Seiten 440, 447, XP008026503 Austin, Texas, USA wird ein Verfahren gemäß dem Obergegriff des Anspruchs 1 beschrieben, bei dem eine Masse aus Schichten eines zu verbindenden (sinternden) Pulvers aufgebaut wird, wobei jeweils nach dem Aufbringen einer Schicht eines zu verbindenden Pulvers die Schicht in ausgewählten Bereichen mit einem Verbindungsinhibitor behandelt wird, so dass das Verbinden nur in den Bereichen des Querschnitts des dreidimensionalen Gegenstands erfolgt. Das Verbinden (Sintern) kann jeweils nach Behandlung einer Schicht mit einem Verbindungsinhibitor erfolgen. Es ist aber auch möglich, nach Fertigstellung aller Schichten die Masse z. B. in einem Ofen zu sintern. Da nur die Bereiche verbunden werden, die nicht mit dem Verbindungsinhibitor in Berührung gekommen sind, wird ein schichtartig aufgebauter dreidimensionaler Körper erhalten.

Es werden nur ganz allgemein Polymerpulver genannt, wie z. B. Polystyrol, Polycarbonat oder Duraform.

Überraschenderweise wurde gefunden, dass Pulver die Polymere oder Copolymere, ausgewählt aus Polyester, Polyvinylchlorid, Polyacetal, Polypropylen, Polyethylen, Polystyrol, Polycarbonat, PMMA, PMMI, Ionomer, Polyamiden, Copolyester, Copolyamide, Terpolymere, Acrylnitril-Butadien-Styrol-Copolymeren (ABS) oder Gemische davon und eine mittlere Korngröße von 10 bis 200 µm aufweisen, besonders gut für die Herstellung von dreidimensionalen Objekten mittels selektiver Verbindungshemmung/-inhibition, insbesondere bei Verfahren, bei denen die Verbindung durch thermische Strahlung erfolgt (Sinterverfahren) geeignet sind.

Gegenstand der vorliegenden Erfindung ist deshalb ein Verfahren zur Herstellung eines dreidimensionalen Objektes umfassend:
a) Bereitstellen einer Schicht von Pulvermaterial,
b) selektives Aufbringen von Verbindungshemmem auf selektierte Bereiche der Schicht aus a), wobei die Bereiche, auf welche der Verbindungshemmer gebracht wird, ausgewählt werden gemäß dem Querschnitt des dreidimensionalen Objektes und zwar in der Weise, dass nur auf die Bereiche Verbindungshemmer aufgebracht werden, die nicht den Querschnitt des dreidimensionalen Objekts ausmachen,
c) wiederholen der Schritte a) und b) bis alle Querschnittsflächen, aus denen das dreidimensionale Objekt aufgebaut ist, in einer Matrix vorhanden sind, und die äußeren Begrenzungen des Objektes durch die Grenze zwischen Pulvermaterial mit aufgebrachtem Verbindungshemmer und unbehandeltem Pulvermaterial gebildet wird und
d) zumindest einmaliges Behandeln der Schichten, so dass nicht mit einem Verbindungshemmer ausgestattetes Pulvermaterial miteinander verbunden wird,
welches dadurch gekennzeichnet ist,
dass das Pulvermaterial eine mittlere Korngröße von 10 bis 200 µm und zumindest ein Polymer oder Copolymer, ausgewählt aus Polyester, Polyvinylchlorid, Polyacetal, Polypropylen, Polyethylen, Polystyrol, Polycarbonat, Polymethylmethacrylat (PMMA), Poly(N-methylmethacrylimid)(PMMI), Ionomer, Polyamiden, Copolyester, Copolyamiden,

Terpolymeren oder Acrylnitril-Butadien-Styrol-Copolymeren oder Gemische davon, aufweist. Ebenfalls ist Gegenstand der vorliegenden Erfindung ein Formkörper, hergestellt durch ein erfindungsgemäßes Verfahren sowie Pulvermaterial, welches zum Einsatz in einem erfindungsgemäßen Verfahren geeignet ist.

Das erfindungsgemäße Verfahren hat durch die Verwendung von Pulvermaterial, welches eine mittlere Korngröße von 10 bis 200 µm und zumindest ein Polymer oder Copolymer, ausgewählt aus Polyacetal, Polyvinylchlorid, Polypropylen, Polyethylen, Polystyrol, Polycarbonat, PMMA, PMMI, Ionomer, Polyamiden oder Gemische davon, aufweist, den Vorteil, dass Bauteile, die so hergestellt wurden, einen deutlich geringeren Schrumpf aufweisen als Bauteile aus Polymermaterialen, die den vorgenannten Bedingungen nicht entsprechen. Durch die Verwendung von Pulvermaterial in den angegebenen Grenzen kann die Rauhigkeit der Oberflächen der hergestellten Formkörper eingestellt werden.

Bei der Verwendung von amorphen oder teilkristallinen Polymeren oder Copolymeren, die einen Schmelzpunkt von über 85 °C und unter 200 °C aufweisen, lässt sich ein großer Schrumpf weitestgehend verhindern. Zudem kann bei der Verwendung von Pulvermaterialien mit einem Schmelzpunkt der Polymeren oder Copolymeren im angegebenen Temperaturbereich auf aufwändige apparative Ausführungen und Auswahl teurer Werkstoffmaterialien für den Aufbau der Apparatur, insbesondere bezüglich Wärmeschutz bzw. Wärmeleitfähigkeit verzichtet werden.

Je nach verwendetem Inhibitorsystem kann die Verwendung von bestimmten Polymeren oder Polymermischungen bevorzugt sein. Durch die Verwendung von Pulvermaterial mit den genannten Randbedingungen im SIV-Verfahren wird eine problemlose Behandlung des Materials mit Inhibitor sichergestellt, ohne dass zu befürchten ist, dass der Inhibitor über den gewünschten Bereich hinaus das Pulvermaterial benetzt, wie dies z. B. bei zu geringer Schüttdichte des Pulvermaterials der Fall sein kann.

Im Gegensatz zum bekannten Laser-Sinter-Verfahren (SLS) ist es mit dem vorliegenden Verfahren möglich, Prototypen oder Kleinserien herzustellen, die farbige Pigmente aufweisen und somit auch in der Farbe dem zukünftigen Serienprodukt entsprechend hergestellt werden können. Bei der Verwendung des SLS-Verfahrens ist wegen des Verwendens eines Lasers der Einsatz von dunkelpigmentiertem Material nicht möglich.

Das erfindungsgemäße Verfahren wird im folgenden beispielhaft beschrieben, ohne dass die Erfindung darauf beschränkt sein soll.

Das erfindungsgemäße Verfahren zur Herstellung eines dreidimensionalen Objektes wird im Anspruch 1 definiert.

Auf as Dokument WO 01/38061 und den dort beschriebenen Verfahrenbedingungen/-parametern wird ausdrücklich Bezug genommen, so dass eine detaillierte Beschreibung des Funktionsprinzips des SIV-Verfahrens mit Verweis auf den Inhalt von WO 01/38061 hier unterbleibt. Das Aufbringen des Verbindungshemmers (Inhibitor) in Schritt b), der üblicherweise Computergesteuert unter Verwendung von CAD-Anwendungen zur Berechnung der Querschnittsflächen erfolgt, hat zur Folge, dass nur unbehandelte Pulverteilchen in einem nachfolgenden Behandlungsschritt verbunden werden. Der Inhibitor wird deshalb nur auf selektierte Bereiche der Schicht aus a) aufgebracht, die nicht zum Querschnitt des zu erstellenden dreidimensionalen Objektes gehören, sondern dieses umgeben. Das Aufbringen selbst kann z. B. durch einen mit Düsen ausgestatteten Druckkopf erfolgen. Nach dem abschließenden Behandlungsschritt d) wird mit dem erfindungsgemäßen Verfahren eine Matrix mit teilweise verbundenem Pulvermaterial erhalten, der nach Entfernen des nicht verbundenen Pulvers das massive dreidimensionale Objekt freigibt.

Je nach Ausführungsart des erfindungsgemäßen Verfahrens kann dieses so durchgeführt werden, dass die Behandlung gemäß d) nach jedem Schritt b) und/oder nach Schritt c) erfolgt. Die Reihenfolge bezüglich der Behandlung gemäß Schritt d), also das Verbinden des Pulvermaterials ist abhängig von dem physikalischen oder chemischen Verfahren, welches zur Verbindung zumindest eines Teils des Pulvermaterials eingesetzt wird. Soll die Behandlung gemäß Schritt d) nach Schritt c) erfolgen, so muss sichergestellt sein, dass das nicht mit Verbindungshemmer behandelte Pulvermaterial in allen Schichten miteinander reagieren kann. Bei dieser Ausführung des Verfahrens erfolgt das Verbinden des Pulvermaterials vorzugsweise durch Wärme, durch chemische Reaktion oder durch durch Wärme initiierte chemische Reaktion. Die Verwendung von Licht-Strahlung, also z. B. von UV-Strahlung zur Vernetzung von Pulverpartikeln, erfolgt vorzugsweise bei solchen Ausführungsarten des erfindungsgemäßen Verfahrens, bei denen der Schritt d) nach jedem Schritt b) erfolgt.

Als physikalische Verfahren stehen sämtliche Verfahren zur Verfügung, die ein gleichzeitiges oder nahezu gleichzeitiges Verbinden von Pulvermaterial in einer oder mehreren Schichten mit Ausnahme des Pulvermaterials, welches mit einem Inhibitor ausgerüstet wurde, ermöglichen. Besonders bevorzugte physikalische Verfahren sind solche Verfahren, bei denen zumindest ein Teil des Pulvermaterials gesintert oder aufgeschmolzen wird. Die bevorzugt eingesetzten Verfahren basieren auf einer Erhöhung der Temperatur, wobei die Temperaturerhöhung durch Einstrahlen von Strahlung, insbesondere Licht-, Wärme- oder Mikrowellenstrahlung, durch Erhöhung der Umgebungstemperatur, durch Erhöhung des Drucks oder durch chemische Reaktion erreicht werden kann.

Als chemische Verfahren stehen ebenfalls diverse chemische Reaktionsverfahren zur Verfügung, die ein Verbinden von zumindest einem Teil der eingesetzten Pulvermaterialien, die nicht mit einem Inhibitor behandelt wurden, ermöglichen. Solche Reaktionsverfahren können insbesondere zur Ausbildung von kovalenten oder ionischen Verbindungen zwischen Molekülen oder Elementen eines Pulverteilchens mit Molekülen oder Elementen eines benachbarten Pulverteilchens führen. Geeignete Reaktionen sind z. B. alle allgemein bekannten Vernetzungsreaktionen oder Polymerisationsreaktionen. Solche Reaktionen sind z. B. radikalische oder ionische Polymerisation, Veresterungen, Polyaddition oder Polykondensation.

Der Verfahrensschritt des Behandelns des Pulvermaterials zum Verbinden kann aber auch eine Kombination von chemischen und physikalischen Verfahren beinhalten. So kann z. B. das Pulvermaterial zumindest teilweise mit reaktiven Gruppen an der Oberfläche ausgerüstet sein, die bei Erwärmung miteinander reagieren. In einem solchen Fall könnte ein Material als Inhibitor eingesetzt werden, welches mit den reaktiven Gruppen auch ohne Erwärmung abreagiert.

Als Verbindungshemmer (Inhibitoren) können unter anderem solche eingesetzt werden, wie sie in WO 01/38061 beschrieben werden. So werden dort als Inhibitoren für Wärmestrahlung induziertes Verbinden z. B. Wärmestrahlen reflektierende Partikel wie metallische Tinten, Silberfarbe oder Glitterpulver oder wärmeisolierende Partikel wie z. B. Keramikpulver oder - dispersionen vorgeschlagen. Als Sinterinhibitoren für Polymere werden Öle, Alkohole oder Wachse vorgeschlagen, die eine so große Viskosität aufweisen, dass sie bei den Sintertemperaturen das Zusammensintern der Pulvermaterialien verhindern, da sie einen dichten Film um das Pulvermaterial bilden. Als Verbindungshemmer können im erfindungsgemäßen Verfahrens auch solche eingesetzt werden, deren verbindungshemmende Wirkung durch Bildung mechanischer Barrieren zwischen den aufzuschmelzenden Teilchen oder durch Bildung isolierender Bereiche zwischen den zu verschmelzenden Partikeln erzielt wird.

Öle, Alkohole oder Wachse können ebenfalls als Inhibitoren für chemische Reaktionen eingesetzt werden. So kann z. B. die Oberfläche der Pulvermaterialien von selektiven Bereichen der einzelnen Schichten mit einem Öl, Alkohol, Kohlenwasserstoff, Wasser oder einer anderen geeigneten Verbindung, wie z. B. einem Silan hydrophobiert oder aber auch hydrophiliert werden. Wird zum Abschluss die gesamte Matrix aus aufgebauten Schichten mit einem Vernetzer, wie z. B. einem Klebstoff z. B. durch Aufgießen oder Aufsprühen des Klebstoffes oder durch Eintauchen der Matrix in den Klebstoff behandelt, und weist dieser hydrophile bzw. hydrophobe Eigenschaften auf, so wird ein Verbinden nur zwischen den nicht mit einem Inhibitor behandelten Pulvermaterialien erfolgen.

Ebenfalls geeignet als Inhibitoren sind z. B. Wasserstoffperoxid, welches mit einem als Pulvermaterial eingesetztem Polymer reagiert und die Oberflächenchemie in eine gewünschte Richtung ändert. Auch die Verwendung von Salzwasser als Inhibitor ist möglich. Das Aufbringen von Salzwasser führt zur Bildung von Kristallen an der Kornoberfläche der Pulvermaterialien und wirkt so als chemischer oder auch physikalischer Separator.

Als Inhibitor eignet sich auch Wasser, wobei dieses zur besseren Benetzung des Pulvermaterial ein die Benetzung verbesserndes Material, wie z. B. Tenside aufweisen kann. Das Wasser kann dabei sowohl ein physikalisches Verbinden der Partikel verhindern, z. B. weil in den Bereichen, in denen die Partikel mit Wasser behandelt wurden diese bei Wärmeeinwirkung nicht sofort schmelzen, sondern wegen der kühlenden Wirkung des verdunstenden Wassers pulverförmig bleiben und sich nicht verbinden. Aber auch chemische Reaktionen können durch den Einsatz von Wasser verhindert werden. So kann zur Inhibierung insbesondere der anionischen Polymerisation als die Partikel verbindende Reaktion Wasser oder Gemisch welches Wasser aufweist, z. B. ein Wasser-Tensid-Gemisch, eingesetzt werden.

Als Inhibitoren können z. B. auch Farbstoffe eingesetzt werden, die z. B. als Filter für die Strahlung einer bestimmten Wellenlänge dienen können und so ein Verbinden der Partikel inhibieren können.

Als Pulvermaterial wird vorzugsweise solches eingesetzt, welches durch Vermahlen, Fällen und/oder anionische Polymerisation oder durch Kombinationen davon, speziell Fällung eines etwas zu groben Pulvers und anschließendes Nachmahlen, oder Fällen und anschließendes Klassieren hergestellt wurde.

Pulvermaterial weist eine mittlere Korngröße (d₅₀) von 10 bis 200 µm, und ganz besonders bevorzugt von 40 bis 70 µm auf. Je nach Verwendungszweck kann es aber auch vorteilhaft sein ein Pulvermaterial einzusetzen, welches besonders kleine Partikel aber auch besonders große Partikel aufweist. Zum Erzielen von dreidimensionalen Gegenständen mit möglichst hoher Auflösung und möglichst glatter Oberfläche kann es vorteilhaft sein, wenn Partikel eingesetzt werden, die eine mittlere Partikelgröße von 10 bis 45 µm, vorzugsweise von 10 bis 35 µm und ganz besonders bevorzugt von 20 bis 30 µm aufweist.

Besonders bevorzugt weisen solche Pulvermaterialien ein Polyamid, insbesondere Polyamid 12, vorzugsweise hergestellt wie in DE 197 08 946 oder auch DE 44 21 454 beschrieben und besonders bevorzugt eine Schmelztemperatur und eine Schmelzenthalpie aufweisend wie in EP 0 911 142 angegeben, oder ein Copolyamid oder Copolyester, wie sie z. B. unter dem Markennamen VESTAMELT^{®} bei der Degussa AG erhältlich sind, auf.

Feines Material kleiner 20 µm, insbesondere kleiner 10 µm ist kaum verarbeitbar, da es nicht rieselt, und die Schüttdichte drastisch sinkt, wodurch mehr Hohlräume entstehen können. Zur leichteren Handhabung kann es vorteilhaft sein, wenn Partikel eingesetzt werden, die eine mittlere Partikelgröße von 60 bis 200 µm, vorzugsweise von 70 bis 150 µm und ganz besonders bevorzugt von 75 bis 100 µm aufweist. Besonders bevorzugt weisen auch solche Pulvermaterialien ein Polyamid, insbesondere Polyamid 12, ein Copolyamid und/oder ein Copolyester wie oben beschrieben auf. Bei der Verwendung von deutlich gröberem Pulver kommt man in einen Konflikt mit der Schichtdicke und die Auflösung wird zu gering.

Die Korngrößenverteilung kann bei den angegebenen mittleren Korngrößen der Pulvermaterialien beliebig gewählt werden. Vorzugsweise werden Pulvermaterialien eingesetzt, die eine breite oder enge Korngrößenverteilung, vorzugsweise eine enge Korngrößenverteilung aufweisen. Besonders bevorzugte Pulvermaterialien für die Verwendung in dem erfindungsgemäßen Verfahren weisen eine Korngrößenverteilung auf, bei der maximal 20 %, vorzugsweise 15 % und ganz besonders bevorzugt maximal 5 % der Partikel eine Abweichung in der Partikelgröße in Bezug auf die mittlere Korngröße von mehr als 50 %, aufweisen. Die Korngrößenverteilung ist durch übliche Verfahren der Klassierung, wie z. B. Windsichten etc. einstellbar. Durch eine möglichst enge Korngrößenverteilung werden bei dem erfindungsgemäßen Verfahren dreidimensionale Objekte erhalten, die eine sehr gleichmäßige Oberfläche haben und, falls vorhanden, sehr gleichmäßige Poren aufweisen.

Zumindest ein Teil des eingesetzten Pulvermaterials kann amorph, kristallin oder teilkristallin sein. Bevorzugtes Pulvermaterial weist eine lineare oder verzweigte Struktur auf. Besonders bevorzugtes Pulvermaterial, welches in dem erfindungsgemäßen Verfahren verwendet wird, weist zumindest zum Teil eine Schmelztemperatur von 70 bis 200 °C auf. In diesen Temperaturbereichen ist insbesondere die Inhibierung von Sintervorgängen durch Verwendung von Ölen, Alkoholen, Wasserstoffperoxid, Wasser oder Salzwasser sehr einfach möglich.

Ganz besonders bevorzugt wird im erfindungsgemäßen Verfahren ein Pulvermaterial eingesetzt, welches ein Polyamid, vorzugsweise zumindest ein Polyamid 6, Polyamid 11 und/oder Polyamid 12 oder ein Copolyester oder ein Copolyamid aufweist. Durch die Verwendung von Polyamiden lassen sich besonders formstabile dreidimensionale Formkörper herstellen. Besonders bevorzugt ist die Verwendung von Polyamid 12 Pulver, wie es z. B. in EP 0 911 142 beschrieben wird. Als bevorzugte Copolyamide oder Copolyester werden bevorzugt solche eingesetzt, wie sie unter dem Markennamen VESTAMELT bei der Degussa AG erhältlich sind. Besonders bevorzugte Copolyamide weisen eine Schmelztemperatur, bestimmt mittels Differential Scanning Calometrie (DSC) von 76 bis 159 °C, vorzugsweise von 98 bis 139 °C und ganz besonders bevorzugt von 110 bis 123 °C auf. Die Copolyamide können z. B. durch Polymerisation von Gemischen von geeigneten Monomeren, z. B. ausgewählt aus Laurinlactam und/oder Caprolactam, als bifunktionelle Komponente, Korksäure, Azelainsäure, Dodecandisäure, Adipinsäure und/oder Sebacinsäure als Säurefunktion tragende Komponente und 1,6-Hexandiamin, Isophorondiamin und/oder Methyl-penta-methylen-diamin als Diamin hergestellt werden.

Um eine bessere Verarbeitbarkeit der Pulvermaterialien zu erreichen wird ein Pulvermaterial eingesetzt welches Rieselhilfen aufweist. Das Pulvermaterial weist eine Rieselhilfe von 0,05 bis 5 Gew.-%, vorzugsweise von 0,1 bis 1 Gew.-% auf. Rieselhilfen können z. B. pyrogene Kieselsäuren, Stearate oder andere literaturbekannte Rieselhilfen, wie z. B. Tricalciumphosphat, Calciumsilicate, Al₂O₃, MgO, MgCO₃ oder ZnO sein. Pyrogene Kieselsäure wird beispielsweise unter dem Markennamen Aerosil^{®} von der Degussa AG angeboten.

Neben solchen zum Teil anorganischen Rieselhilfen kann ein erfindungsgemäß eingesetztes Pulvermaterial auch anorganische Füllkörper aufweisen. Die Verwendung solcher Füllkörper hat den Vorteil, dass diese ihre Form durch die Behandlung beim Verbinden im wesentlichen beibehalten und somit den Schrumpf des dreidimensionalen Objektes verringern. Zudem ist es durch die Verwendung von Füllkörpern z. B. möglich, die plastischen und physikalischen Eigenschaften der Objekte zu verändern. So können durch Verwendung von Pulvermaterial, welches Metallpulver aufweist, sowohl die Transparenz und Farbe als auch die magnetischen Eigenschaften des Objektes eingestellt werden. Als Füllstoffe bzw. -körper kann das Pulvermaterial z. B. Glaspartikel, Keramikpartikel oder Metallpartikel aufweisen. Typische Füllstoffe sind z. B. Metallgriese, Aluminiumpulver, Stahl- oder Glaskugeln. Besonders bevorzugt werden Pulvermaterialien eingesetzt, die als Füllkörper Glaskugeln aufweisen. In einer bevorzugten Ausführungsvariante weist das erfindungsgemäße Pulvermaterial von 1 bis 70 Gew.-%, vorzugsweise von 5 bis 50 Gew.-% und ganz besonders bevorzugt von 10 bis 40 Gew.-% an Füllstoffen auf.

Neben anorganischen Rieselhilfen kann ein erfindungsgemäß eingesetztes Pulvermaterial auch anorganische oder organische Pigmente oder Füllstoffen aufweisen. Diese Pigmente können neben Farbpigmenten, die die Farberscheinung des zu erstellenden dreidimensionalen Körpers bestimmen, auch Pigmente sein, die andere physikalische Eigenschaften der herzustellenden dreidimensionalen Gegenstände beeinflussen, wie z. B. Magnetpigmente oder Leitfähigkeitspigmente, wie z. B. leitfähig modifiziertes Titandioxid oder Zinnoxid, die den Magnetismus bzw. die Leitfähigkeit des Gegenstandes verändern. Besonders bevorzugt weist das einzusetzende Pulvermaterial aber anorganische oder organische Farbpigmente, ausgewählt aus Kreide, Ocker, Umbra, Grünerde, Terra di Siena gebrannt, Graphit, Titanweiß (Titandioxid), Bleiweiß, Zinkweiß, Lithopone, Antimonweiß, Ruß, Eisenoxidschwarz, Manganschwarz, Cobaltschwarz, Antimonschwarz, Bleichromat, Mennige, Zinkgelb, Zinkgrün, Cadmiumrot, Cobaltblau, Berliner Blau, Ultramarin, Manganviolett, Cadmiumgelb, Schweinfurter Grün, Molybdatorange, Molybdatrot, Chromorange, Chromrot, Eisenoxidrot, Chromoxidgrün, Strontiumgelb, Metalleffektpigmente, Perlglanzpigmente, Leuchtpigmente mit Fluoreszenz-und/oder Phosphoreszenzpigmenten, Umbra, Gummigutt, Knochenkohle, Kasseler Braun, Indigo, Chlorophyll, Azofarbstoffe, Indigoide, Dioxazinpigmente, Chinacridonpigmente, Phthalocyaninpigmente, Isoindolinonpigmente, Perylenpigmente, Perinonpigmente, Metallkomplexpigmente, Alkaliblaupigmente und Diketopyrrolopyrrol auf. Weitere Informationen zu einsetzbaren Pigmenten können z. B. Römpp Lexikon Chemie - Version 2.0, Stuttgart/New York: Georg Thieme Verlag 1999 sowie der dort angegebenen Literatur entnommen werden. Die eingesetzten Pigmente können Korngrößen aufweisen wie für das Pulvermaterial beschrieben. Häufig weisen die Pigmente allerdings Korngrößen auf, die deutlich kleiner sind als die mittleren Korngrößen der eingesetzten Polymere. Die Pigmente können z. B. ähnlich wie der Verbindungshemmer durch Düsen, wie sie bei Druckköpfen verwendet werden, aufgetragen werden oder in den eingesetzten Polymerpartikeln vorhanden sein. Besonders bevorzugt weist das erfindungsgemäße Pulvermaterial Polymerpartikel auf, die ein oder mehrere der genannten Pigmente - bevorzugt mit Ausnahme von Weißpigmenten allein - aufweisen. Der Anteil der Pigmente am Pulvermaterial beträgt vorzugsweise von 0,01 bis 25 Gew.-%, vorzugsweise von 0,1 bis 10 Gew.-% und besonders bevorzugt von 1 bis 3 Gew.-%.

Die Formteile können somit bei dem erfindungsgemäßen Verfahren mit einer oder mehreren funktionalisierten Schichten ausgerüstet werden. Beispielsweise kann eine Funktionalisierung, wie z. B. die Ausrüstung mit leitfähigen Eigenschaften des ganzen Formteils oder aber auch nur bestimmter Bereiche durch Auftragen entsprechender Pigmente oder Substanzen analog zum Inhibitor erfolgen.

In einer besonderen Ausführungsvariante des erfindungsgemäßen Verfahrens werden Verbindungshemmer eingesetzt, die nur temporär wirken. Diese Verbindungshemmer können Rahmen, Platten, Spiegel oder Gläser von unterschiedlicher Form sein, die auch aus mehreren Teilen aufgebaut sein können, die nach dem Aufbringen des Pulvers Teile dieser Pulverschicht in einer Art Rahmen abdecken. Durch eine große Anzahl unterschiedlicher Formen oder durch flexible Formen, die rechnergesteuert an die abzudeckende Fläche angepasst werden können, ist nahe zu jede erdenkliche Querschnittsfläche abzudecken. Das Pulvermaterial der nicht abgedeckten Fläche wird durch Einwirken von Strahlung, insbesondere Wärmestrahlung oder durch Besprühen mit einer Chemikalie miteinander und mit der darunter liegenden Schicht verbunden. Anschließend werden die temporären Verbindungshemmer entfernt und es wird eine neue Schicht Pulvermaterial aufgebracht. Durch eine entsprechend der Anzahl der Querschnittsflächen wiederholte Durchführung der Verfahrensschritte wird auch bei dieser Ausführungsvariante des erfindungsgemäßen Verfahrens ein dreidimensionaler Gegenstand erhalten. Als Pulvermaterialen sind die bereits genannten Materialien einsetzbar.

Mittels des erfindungsgemäßen Verfahrens sind Formkörper herstellbar, die jede beliebige dreidimensionale Form aufweisen kann, die durch Schichten gebildet werden kann. Der Formkörper weist besonders bevorzugt ein Polyamid 12, Copolyamid oder Copolyester auf. Formkörper, die mit dem erfindungsgemäßen Verfahren hergestellt wurden, weisen vorzugsweise zumindest einen Füllstoff, ausgewählt aus Glaskugeln oder Aluminiumpulver auf. Mittels des erfindungsgemäßen Verfahrens sind insbesondere Formkörper herstellbar, die eine andere Farbe als weiß oder (milchig- oder gelblich-)transparent aufweisen. Formkörper mit solchen Farben lassen sich mit herkömmlichen Laser-Sinter-Verfahren nicht herstellen, da die Farbpigmente den Energieeintrag durch den Laser beeinträchtigen. Die erfindungsgemäß hergestellten Formkörper können auch Schichten aufweisen, die funktionalisiert sind. Neben einer Funktionalisierung durch Pigmente können auch Verbindungen mit bestimmten funktionellen Eigenschaften in einer oder mehreren der Schichten oder in gesamten Formkörper vorliegen. Eine Funktionalisierung könnte z. B. darin bestehen, dass der ganze Formkörper, eine oder mehrere Schichten des Formkörpers oder auch nur Teile einer oder mehrerer Schichten des Formkörpers elektrisch leitend ausgerüstet wird. Diese Funktionalisierung kann durch leitfähige Pigmente, wie z. B. Metallpulver oder durch Verwendung von leitfähigen Polymeren, wie z. B. Polyanilin erreicht werden. Auf diese Weise sind Formkörper, die Leiterbahnen aufweisen, erhältlich, wobei diese sowohl oberflächlich als auch innerhalb des Formkörpers vorhanden sein können.

### Beispiele:

Es wurden dreieckige Objekte mit einer Kantenlänge von 50 x 50 mm mittels des erfindungsgemäßen Verfahrens zum Selektiven Inhibieren des Verbindens hergestellt. Dazu wurde ein quadratischer Metallrahmen mit Innenmaßen von 50 mm und Außenmaßen von 100 mm mit einer Dicke von 1 mm auf eine durchgehende Metallplatte gelegt. Anschließend wurde die so entstandene Öffnung mit Pulver ausgefüllt und mit einer weiteren Metallplatte glattgestrichen. Die eine Hälfte des Rechtecks wurde dann mit einer flexiblen Metallplatte abgedeckt. Die verbleibende Pulveroberfläche wurde dann mit Wasser, welches mit 10 Gew.-% Spülmittel (Pril, Henkel) versetzt war, durch Aufsprühen mit einer Airbrushpistole gleichmäßig benetzt. Nach Entfernen der Abdeckung wurde die gesamte Pulverschicht für 2 bzw. 5 Sekunden in einen Abstand von 2 cm zu einem Heizstrahler mit einer Leistung von 1000 Watt der Firma AKO erwärmt. Es wurde eine Pulverschicht erhalten, in der als Bauteil ein dreieckiges Gebilde aus versintertem Pulver enthalten war. Das um das Bauteil herum vorhandene Pulver, welches bei der Herstellung mit dem Spülmittel aufweisenden Wasser behandelt wurde, lag weiterhin pulverförmig vor. Das Bauteil konnte ohne Schwierigkeiten aus der Pulverschicht entnommen werden. In der nachfolgenden Tabelle 1 sind die getesteten Pulver sowie die Versuchsergebnisse aufgelistet.

**Tabelle 1:**

| Pulvermaterial | Handelsname | Schmelzpunkt (DSC) in °C | Ergebnis |
|---|---|---|---|
| Copolyamid | Vestamelt X1310 | 110 | Kein Curl, gut versinterbar, scharfe Kanten |
| PA12 | EOSINT PA 2200 | 186 | Gut versinterbar, leichtes curling |
| PA612 | Vestamid D16 | 216 | versinterbar |
| Copolyester | Vestamelt 4481 | 107 | Gut versinterbar |
| Copolyamid | Vestamelt 840 | 113 | Sehr gut versinterbar, bei 5 Sekunden Bestrahlung auch Versintern der mit Inhibitor belegten Teile; bei 5 Sekunden und 10 cm Abstand unscharfe Kanten |
| PE | Vestolen A6016 | | Gut versinterbar, Curl |
| E-PVC | Vestolit P1403 K | | Versinterbar, Verfärbung |
| M-PVC | Vestolit P2004 KF | | Versinterbar, Verfärbung |

Die Abkürzungen M-PVC und E-PVC geben die Art der Herstellung des PVC an: M-PVC steht für durch Massepolymerisation und E-PVC steht für durch Emulsionspolymerisation erhaltenes Polyvinylchlorid. PE steht für Polyethylen.

Die Produkte mit dem Vestamelt und Vestamid sind bei der Degussa AG zu beziehen. Das Produkt EOSINT PA 2200 ist bei der EOS GmbH Electro Optical Systems zu beziehen. Das Produkt Vestolen ist über Sabic EPC zu beziehen und die Produkte mit dem Namen Vestolit sind über die Vestolit GmbH & Co KG erhältlich. Die vorgenannten Produktnamen sind eingetragene Marken der jeweiligen angegebenen Firmen mit Ausnahme des Namens Vestolen, der als Marke auf die DSM Polyolefin GmbH, Gelsenkirchen eingetragen ist.

## Patentansprüche

1. Verfahren zur Herstellung eines dreidimensionalen Objektes umfassend:
a) Bereitstellen einer Schicht von Pulvermaterial,
b) selektives Aufbringen von Verbindungshemmem auf selektierte Bereiche der Schicht aus a), wobei die Bereiche, auf welche der Verbindungshemmer gebracht wird, ausgewählt werden gemäß dem Querschnitt des dreidimensionalen Objektes und zwar in der Weise, dass nur auf die Bereiche Verbindungshemmer aufgebracht werden, die nicht den Querschnitt des dreidimensionalen Objekts ausmachen,
c) wiederholen der Schritte a) und b) bis alle Querschnittsflächen, aus denen das dreidimensionale Objekt aufgebaut ist, in einer Matrix vorhanden sind, und die äußeren Begrenzungen des Objektes durch die Grenze zwischen Pulvermaterial mit aufgebrachtem Verbindungshemmer und unbehandeltem Pulvermaterial gebildet wird und
d) zumindest einmaliges Behandeln der Schichten, so dass nicht mit einem Verbindungshemmer ausgestattetes Pulvermaterial miteinander verbunden wird,
**dadurch gekennzeichnet,**
**dass** das Pulvermaterial eine mittlere Korngröße von 20 bis 100 µm und zumindest ein Polymer oder Copolymer, ausgewählt aus Polyester, Polyvinylchlorid, Polyacetal, Polypropylen, Polyethylen, Polystyrol, Polycarbonat, PMMA, PMMI, Ionomer, Polyamiden, Copolyester, Copolyamiden, Terpolymeren oder ABS oder Gemische davon, mit zumindest teilweise einer Schmelztemperatur von 70 bis 200 °C, und 0,05 bis 5 Gew.-% einer Rieselhilfe aufweist.

2. Verfahren nach Anspruch 1,
**dadurch gekennzeichnet,**
**dass** die Behandlung gemäß d) nach jedem Schritt b) erfolgt.

3. Verfahren nach Anspruch 1 oder 2,
**dadurch gekennzeichnet,**
**dass** die Behandlung gemäß d) nach Schritt c) erfolgt.

4. Verfahren nach einem der Ansprüche 1 bis 3,
**dadurch gekennzeichnet,**
**dass** ein Pulvermaterial eingesetzt wird, welches durch Vermahlen, Fällen und/oder anionische Polymerisation oder einer Kombination daraus oder durch anschließende Fraktionierung hergestellt wurde.

5. Verfahren nach einem der Ansprüche 1 bis 4,
**dadurch gekennzeichnet,**
**dass** ein Pulvermaterial eingesetzt wird, welches ein Polyamid 6, Polyamid 11 und/oder Polyamid 12 aufweist.

6. Verfahren nach einem der Ansprüche 1 bis 5,
**dadurch gekennzeichnet,**
**dass** ein Pulvermaterial eingesetzt wird, welches amorph oder teilkristallin ist.

7. Verfahren nach einem der Ansprüche 1 bis 6,
**dadurch gekennzeichnet,**
**dass** ein Pulvermaterial eingesetzt wird, welches eine lineare oder verzweigte Struktur aufweist.

8. Verfahren nach einem der Ansprüche 1 bis 7,
**dadurch gekennzeichnet,**
**dass** das Pulvermaterial anorganische Füllkörper aufweist.

9. Verfahren nach Anspruch 8,
**dadurch gekennzeichnet,**
**dass** als Füllkörper Glaskugeln eingesetzt werden.

10. Verfahren nach einem der Ansprüche 1 bis 9,
**dadurch gekennzeichnet,**
**dass** das Pulvermaterial anorganische oder organische Pigmente aufweist.

11. Verfahren nach einem der Ansprüche 1 bis 10,
**dadurch gekennzeichnet,**
**dass** ein Verbindungshemmer eingesetzt wird, der ein Material mit benetzenden Eigenschaften aufweist.

12. Verfahren nach einem der Ansprüche 1 bis 11,
**dadurch gekennzeichnet,**
**dass** ein Verbindungshemmer eingesetzt wird, der eine Flüssigkeit, ausgewählt aus Wasser, Öl oder Alkohol aufweist.

13. Verfahren nach einem der Ansprüche 1 bis 12,
**dadurch gekennzeichnet,**
**dass** ein temporär wirkender Verbindungshemmer eingesetzt wird.

## Claims

1. Process for producing a three-dimensional object, encompassing:
a) providing a layer of pulverulent material,
b) applying, selectively, bonding inhibitors to selected regions of the layer from a), the manner of selection of the regions on which the bonding inhibitor is placed being in accordance with the cross section of the three-dimensional object, and specifically being such that bonding inhibitors are applied only to the regions which are not part of the cross section of the three-dimensional object,
c) repeating steps a) and b) until all of the cross-sectional areas of which the three-dimensional object is composed form a matrix, and the outer boundaries of the object are formed by the interface between pulverulent material with applied bonding inhibitor and untreated pulverulent material, and
d) on at least one occasion, treating the layers so that bonding takes place between pulverulent material not provided with a bonding inhibitor,
**characterized in that**
a median particle size of from 20 to 100 µm is used for the pulverulent material, in which at least one polymer or copolymer selected from polyester, polyvinyl chloride, polyacetal, polypropylene, polyethylene, polystyrene, polycarbonate, PMMA, PMMI, ionomer, polyamides, copolyester, copolyamides, terpolymers, or ABS, or a mixture of these, having, at least in part, a melting point of from 70 to 200°C, and from 0.05 to 5% by weight of a flow aid, are present.

2. Process according to Claim 1,
**characterized in that**
the treatment in d) takes place after each step b).

3. Process according to Claim 1 or 2,
**characterized in that**
the treatment in d) takes place after step c).

4. Process according to any of Claims 1 to 3,
**characterized in that**
use is made of a pulverulent material which has been prepared by grinding, precipitation, and/or anionic polymerization, or by a combination of these, or by subsequent fractionation.

5. Process according to any of Claims 1 to 4,
**characterized in that**
use is made of pulverulent material in which a nylon-6, nylon-11, and/or nylon-12 is present.

6. Process according to any of Claims 1 to 5,
**characterized in that**
use is made of a pulverulent material which is amorphous or semicrystalline.

7. Process according to any of Claims 1 to 6,
**characterized in that**
use is made of pulverulent material which has a linear or branched structure.

8. Process according to any of Claims 1 to 7,
**characterized in that**
the pulverulent material comprises inorganic fillers.

9. Process according to Claim 8,
**characterized in that**
the fillers used comprise glass beads.

10. Process according to any of Claims 1 to 9,
**characterized in that**
the pulverulent material comprises inorganic or organic pigments.

11. Process according to any of Claims 1 to 10,
**characterized in that**
use is made of a bonding inhibitor which comprises a material with wetting properties.

12. Process according to any of Claims 1 to 11,
**characterized in that**
use is made of a bonding inhibitor which comprises a liquid selected from water, oil, or alcohol.

13. Process according to any of Claims 1 to 12,
**characterized in that**
use is made of bonding inhibitor with temporary action.

## Revendications

1. Procédé pour la production d'un objet tridimensionnel, comprenant:
a) la préparation d'une couche de matériau poudreux,
b) l'application sélective d'inhibiteurs d'assemblage sur des zones sélectionnées de la couche de a), les zones, sur lesquelles l'inhibiteur d'assemblage est déposé, devant être choisies selon la section transversale de l'objet tridimensionnel et ce de telle manière qu'on n'applique de l'inhibiteur d'assemblage que sur des zones qui ne forment pas la section de l'objet tridimensionnel,
c) la répétition des étapes a) et b) jusqu'à ce que toutes les surfaces de la section transversale à partir desquelles l'objet tridimensionnel est construit, se trouvent dans une matrice et que les limitations extérieures de l'objet soient formées par la limite entre le matériau poudreux avec l'inhibiteur d'assemblage appliqué et le matériau poudreux non traité et
d) le traitement au moins une fois des couches de telle manière que du matériau poudreux non apprêté d'un inhibiteur d'assemblage est assemblé l'un à l'autre,
**caractérisé en ce que** le matériau poudreux présente une grosseur moyenne des particules de 20 à 100 µm et au moins un polymère ou copolymère choisi par le polyester, le poly(chlorure de vinyle), le polyacétal, le polypropylène, le polyéthylène, le polystyrène, le polycarbonate, le PMMA, le PMMI, un ionomère, les polyamides, les copolyesters, les copolyamides, les terpolymères ou l'ABS ou des mélanges de ceux-ci, avec au moins partiellement une température de fusion de 70 à 200°C, et 0,05 à 5% en poids d'un adjuvant d'écoulement.

2. Procédé selon la revendication 1, **caractérisé en ce que** le traitement selon d) est réalisé après chaque étape b).

3. Procédé selon la revendication 1 ou 2,
**caractérisé en ce que** le traitement selon d) est réalisé après l'étape c).

4. Procédé selon l'une quelconque des revendications 1 à 3, **caractérisé en ce qu'**on utilise un matériau poudreux qui a été préparé par broyage, précipitation et/ou polymérisation anionique ou une combinaison de ces procédés ou par un fractionnement consécutif.

5. Procédé selon l'une quelconque des revendications 1 à 4, **caractérisé en ce qu'**on utilise un matériau poudreux qui présente un polyamide 6, un polyamide 11 et/ou un polyamide 12.

6. Procédé selon l'une quelconque des revendications 1 à 5, **caractérisé en ce qu'**on utilise un matériau poudreux qui est amorphe ou partiellement cristallin.

7. Procédé selon l'une quelconque des revendications 1 à 6, **caractérisé en ce qu'**on utilise un matériau poudreux qui présente une structure linéaire ou ramifiée.

8. Procédé selon l'une quelconque des revendications 1 à 7, **caractérisé en ce que** le matériau poudreux présente des charges inorganiques.

9. Procédé selon la revendication 8, **caractérisé en ce qu'**on utilise des billes de verre comme charge.

10. Procédé selon l'une quelconque des revendications 1 à 9, **caractérisé en ce que** le matériau poudreux présente des pigments inorganiques ou organiques.

11. Procédé selon l'une quelconque des revendications 1 à 10, **caractérisé en ce qu'**on utilise un inhibiteur d'assemblage qui présente un matériau avec des propriétés mouillantes.

12. Procédé selon l'une quelconque des revendications 1 à 11, **caractérisé en ce qu'**on utilise un inhibiteur d'assemblage qui présente un liquide choisi parmi l'eau, une huile ou un alcool.

13. Procédé selon l'une quelconque des revendications 1 à 12, **caractérisé en ce qu'**on utilise un inhibiteur d'assemblage agissant temporairement.
